# EUROPÄISCHE PATENTANMELDUNG

(11) **EP 4 530 225 A1**
(43) Veröffentlichungstag der Anmeldung: **02.04.2025**
(21) Anmeldenummer: 23199656.2
(22) Anmeldetag: 26.09.2023
(51) Int. Cl.: B65G 1/04, B65G 47/90, G07F 17/00, G01G 15/00, G01G 19/42, G01G 19/52

(54) **GREIFER FÜR KOMMISSIONIERVORRICHTUNG SOWIE VERFAHREN ZUM BETREIBEN EINER KOMMISSIONIERVORRICHTUNG**

(71) Anmelder: Becton Dickinson Rowa Germany GmbH, 53539 Kelberg (DE)
(72) Erfinder: Groß, Dietmar, 53539 Kelberg (DE); Brokonier, Stephan, 54570 Neroth (DE); Bause, Andreas, 56645 Nickenich (DE); Bühning, Axel, 53520 Müllenbach (DE); Hommes, Maximilian, 54558 Gillenfeld (DE); Reif, Dennis, 56727 Mayen (DE); Raschke, Alexander, 53539 Kelberg (DE); Hellenbrand, Christoph, 56761 Kaifenheim (DE)
(74) Vertreter: Zenz Patentanwälte Partnerschaft mbB

(57) **Zusammenfassung**

Die vorliegende Erfindung betrifft einen Greifer für eine Kommissioniervorrichtung zur Lagerung von Stückgut sowie ein Verfahren zum Betreiben einer Kommissioniervorrichtung mit einem erfindungsgemäßen Greifer. Zur Optimierung der Lagerung umfasst der Greifer einen sich in einer ersten horizontalen Richtung und einer zweiten horizontalen Richtung, orthogonal zur ersten horizontalen Richtung erstreckenden Ablagetisch (10), eine über dem Ablagetisch (10) angeordnete und in der ersten horizontalen Richtung bewegbare Transporteinrichtung (30) zum Bewegen von Stückgut auf den Ablagetisch (10) des Greifers und zumindest eine Wiegeeinrichtung (100, 200, 300) zum Ermitteln des Gewichts zumindest eines auf dem Greifer (1) angeordneten Stückguts. Bei dem erfindungsgemäßen Verfahren wird der Greifer an eine Sollposition einer Einlagerungseinrichtung (420, 430) verfahren, mit einer Transporteinrichtung (30) des Greifers (1) wird zumindest ein Stückgut auf den Ablagetisch (10) bewegt und mit der zumindest einen Wiegeeinrichtung (100, 200, 300) wird ein Ist-Gewicht des zumindest einen auf den Ablagetisch (10) bewegten Stückguts ermittelt und an die Steuereinrichtung (370) übertragen.

## Beschreibung

Die vorliegende Erfindung betrifft einen Greifer für eine Kommissioniervorrichtung zur Lagerung von Stückgut sowie ein Verfahren zum Betreiben einer Kommissioniervorrichtung mit einem erfindungsgemäßen Greifer.

Kommissioniervorrichtungen werden seit längerem zur chaotischen Lagerung von Arzneimittelpackungen, Nahrungsergänzungsmittelpackungen und vergleichbarem Stückgut verwendet. Die Kommissioniervorrichtungen umfasst dazu ein Bediengerät mit einem Greifer, mit welchem Stückgut von einer Einlagerungseinrichtung entnommen und zu einem Lagerplatz bewegt wird. Bei der klassischen chaotischen Lagerung werden Stückgüter in der Kommissioniervorrichtung nicht auf festen, vordefinierten Lagerplätzen gelagert, sondern auf beispielsweise solchen Regalböden, auf denen ein passender Lagerplatz vorhanden ist, wobei der Lagerplatz allein durch den Platzbedarf eines Stückgutes bestimmt wird. Dadurch kann unnötiges Leervolumen vermieden und die Anzahl der eingelagerten Stückgüter pro Grundfläche deutlich erhöht werden.

Zur Einlagerung von beispielsweise einer Arzneimittelpackung wird diese nach bekannten Verfahren der Stückgutlagerung identifiziert, ggf. vermessen und in einem vorgegebenen Ablagebereich einer Einlagerungseinrichtung der Kommissioniervorrichtung abgelegt. Anschließend wird die Arzneimittelpackung in einen Zugriffsbereich eines Greifers, wie er beispielsweise aus der EP 3 431 421 A1 bekannt ist, eines Bediengeräts innerhalb der Kommissioniervorrichtung bewegt, von dem Greifer aufgenommen und zu dem von einer Steuereinrichtung bestimmten Lagerplatz bewegt.

Abhängig insbesondere von der Breite eines Regalbodens und der Art der auf einem Regalboden gelagerten Arzneimittelpackungen kann es vorkommen, dass sich der Regalboden unter dem Gewicht der gelagerten Arzneimittelpackungen geringfügig durchbiegt, was insbesondere bei der Entnahme einer Arzneimittelpackung zu Problemen führen kann, da die Ausrichtung des zur Entnahme verwendeten Greifers zum Regalboden nicht mehr optimal ist. Je nach Ausmaß der Durchbiegung kann dies dazu führen, dass eine Arzneimittelpackung nicht mehr entnommen werden kann.

Beim Auftreten von Fehlern innerhalb der Kommissioniervorrichtung ist es gelegentlich notwendig, dass diese von Bedienpersonal betreten wird. Dabei kann es vorkommen, dass auf einer Einlagerungseinrichtung aufliegendes Stückgut derart bewegt wird, dass es nicht mehr an dem Platz auf der Einlagerungseinrichtung aufliegt, die von einer Steuereinrichtung "erwartet" wird. Bei Weiterbetrieb der Kommissioniervorrichtung kann es dann vorkommen, dass nicht das "erwartete" Stückgut ergriffen und eingelagert wird.

Es ist Aufgabe der vorliegenden Erfindung, einen Greifer bereitzustellen, der die Möglichkeit bietet, den Einlagerungsvorgang von Stückgut zu optimieren und die vorgenannten Nachteile zu vermeiden. Es ist ferner Aufgabe der Erfindung, ein Verfahren zum Betreiben einer Kommissioniervorrichtung bereitzustellen, welches die Einlagerung optimiert.

Die Aufgabe wird gelöst durch einen Greifer aufweisend einen sich in einer ersten horizontalen Richtung und einer zweiten horizontalen Richtung, orthogonal zur ersten horizontalen Richtung, erstreckenden Ablagetisch sowie eine über dem Ablagetisch angeordnete und in der ersten horizontalen Richtung bewegbare Transporteinrichtung zum Bewegen von Stückgut auf den Ablagetisch des Greifers. Erfindungsgemäß umfasst der Greifer zumindest eine Wiegeeinrichtung zum Ermitteln des Gewichts zumindest eines auf dem Greifer angeordneten Stückguts.

Basierend auf den mit dem erfindungsgemäßen Greifer ermittelbaren Gewichtsdaten kann beispielsweise die Lagerung dieses Stückguts optimiert werden - der Lagerplatz wird nicht ausschließlich aufgrund des Platzbedarfs bestimmt, sondern das Gewicht des Stückguts kann zusätzlich berücksichtigt werden. Dies setzt zwar voraus, dass der Lagerplatz erst dann bestimmt wird, wenn das Stückgut auf dem Greifer aufliegt, was aber aufgrund der Rechenleistung moderner Steuereinrichtungen kein Problem darstellt (der Greifer ist mit einer Steuereinrichtungen gekoppelt, an die das ermittelte Gewicht übermittelt wird und die dann einen Lagerplatz bestimmen kann). Ein "schweres" Stückgut kann dann z. B. auf einem Lagerplatz für schwere Stückgüter gelagert werden.

Wie oben beschrieben, werden die Stückgüter identifiziert, bevor sie in die Kommissioniervorrichtung bewegt werden. Dabei kann es vorkommen, dass aufgrund der Identifikation das Sollgewicht eines Stückgutes bekannt ist. Das mit dem Greifer ermittelte Gewicht kann dann dazu verwendet werden, das Stückgut anhand des Gewichts zu verifizieren, wodurch Fehleinlagerungen, z. B. durch benutzerbedingte Verschiebungen auf der Einlagerungseinrichtung oder andere Bedienungsfehler, vermieden werden.

Bei dem erfindungsgemäßen Greifer ist es nicht wesentlich, wo genau die zumindest eine Wiegeeinrichtung angeordnet ist. Bei einer bevorzugten Ausführungsform ist es vorgesehen, dass die zumindest eine Wiegeeinrichtung derart zu dem Ablagetisch angeordnet ist, dass mit der Wiegeeinrichtung das Gewicht von auf dem Ablagetisch aufliegendem Stückgut ermittelbar ist. Im einfachsten Fall bedeutet dies, dass die Wiegeeinrichtung unterhalb des Ablagetisches angeordnet ist und diese entsprechend gelagert ist. Bei einer entsprechenden Ausführungsform kann die Wiegeeinrichtung in dem unterhalb des Ablagetisches vorhandenen Greifergrundkörper integriert werden und ist vor Beschädigungen geschützt.

Der Ablagetisch des Greifers kann einteilig sein. Bei einer bevorzugten Ausführungsform ist es aber vorgesehen, dass der Ablagetisch mehrteilig ist und jedem Ablagetischteil eine Wiegeeinrichtung zugeordnet ist, mit welcher das Gewicht von auf dem Ablagetischteil aufliegendem Stückgut ermittelbar ist. Bei einer entsprechenden Ausführungsform kann bei entsprechender Aufteilung des Ablagetisches durch einen zwischen den Ablagetischteilen angeordneten Schlitz ein Schiebeelement geführt werden, mit welchem Stückgut von dem Ablagetisch bewegt werden kann. Die Gewichtsermittlung kann dann so durchgeführt werden, dass das Gesamtgewicht (über beide Wiegeeinrichtungen) ermittelt wird. Wenn allerdings sichergestellt ist, dass auf jedem Ablagetischteil getrennt voneinander Stückgut angeordnet ist (dies sollte anhand der Anordnung auf der Einlagerungseinrichtung bekannt sein oder kann durch ein Sensormodul ermittelt werden), kann das Gewicht pro Ablagetischteil ermittelt werden.

Bei einer bevorzugten Ausführungsform ist es vorgesehen, dass der Greifer einen Befestigungsarm umfasst, mit welchem der Greifer an einer Greiferführung befestigbar ist, wobei der Befestigungsarm einen sich von einer vertikalen Zentralachse des Greifers weg weisenden Tragabschnitt aufweist und dieser Tragabschnitt eine vorzugsweise als Dehnstreifen ausgebildete Wiegeeinrichtung aufweist. Bei dieser Ausführungsform ist die Wiegeeinrichtung also (ggf. zusätzlich) an dem Befestigungsarm angeordnet. Dies hat den Vorteil, dass nicht noch weitere Bauteile in den Hauptkörper des Greifers integriert werden müssen. Es ist auch denkbar beide Varianten miteinander zu kombinieren (also Wiegeeinrichtung unter dem Ablagetisch sowie bei dem Tragabschnitt).

Um die Ausfallsicherheit zu erhöhen, ist es bei einer bevorzugten Ausführungsform vorgesehen, dass die zumindest eine dem Ablagetisch zugeordnete Wiegeeinrichtung jeweils zwei Wiegeelemente umfasst. Die Wiegeelemente funktionieren eigenständig, d. h. jedes erfasst das Gewicht des aufliegenden Stückguts.

Die Aufgabe wird ferner gelöst durch ein Verfahren zum Betreiben einer Kommissioniervorrichtung, wobei diese zumindest eine Steuereinrichtung, eine Einlagerungseinrichtung sowie ein Bediengerät mit einem Greifer mit zumindest einer Wiegeeinrichtung zum Ermitteln eines Gewichts zumindest eines auf dem Greifer angeordneten Stückguts umfasst. Erfindungsgemäß wird der Greifer an eine Sollposition einer Einlagerungseinrichtung verfahren, mit einer Transporteinrichtung des Greifers wird zumindest ein Stückgut auf den Ablagetisch bewegt, und mit der zumindest einen Wiegeeinrichtung wird ein Ist-Gewicht des zumindest einen auf den Ablagetisch bewegten Stückguts ermittelt und an die Steuereinrichtung übertragen.

Das an die Steuereinrichtung übertragene Gewicht kann auf verschiedene Art und Weise zur Optimierung der Einlagerung genutzt werden. Bei einer bevorzugten Ausführungsform wird das übertragene Ist-Gewicht des auf den Ablagetisch bewegten Stückguts mit einem Soll-Gewicht verglichen, das anhand einer vorgeschalteten Identifizierung des Stückguts bekannt ist, und bei Nichtüberschreiten einer vorgegebenen Gewichtsabweichung wird der Transportvorgang verifiziert. So kann größtenteils ausgeschlossen werden, dass Bedienfehler nach dem Identifizieren oder ein Verschieben auf der Einlagerungseinrichtung unbemerkt bleiben. Wenn ein Stückgut nicht das "erwartete" Gewicht hat, darf davon ausgegangen werden, dass es nicht bei der Stelle auf dem Einlagerungsband angeordnet war an der es die Steuereinrichtung erwartet hat.

Bei einer bevorzugten Ausführungsform, bei der der Greifer ferner ein Sensormodul umfasst, mit welchem die Anordnung von auf den Ablagetisch bewegten Stückguts erfassbar ist und der Ablagetisch mehrteilig ist und jedem Ablagetischteil eine Wiegeeinrichtung zugeordnet ist, mit welcher das Gewicht von auf dem Ablagetischteil aufliegendem Stückgut ermittelbar ist, wird mit dem Sensormodul eine Aufnahme der Stückgüter auf dem Ablagetisch erstellt und basierend auf dieser Aufnahme die genaue Anordnung des Stückguts ermittelt, und es werden, sofern auf jedem Ablagetischteil Stückgut angeordnet ist, die Ist-Gewichte des auf den Ablagetischteilen angeordneten Stückguts ermittelt und an die Steuereinrichtung übertragen.

Trotz der notwendigen Identifizierung von Stückgut vor dem Bewegen in die Kommissioniervorrichtung ist es nicht sichergestellt, dass stets die Gewichtsdaten eines Stückguts bekannt sind. Es kann vorkommen, dass in einer entsprechenden Datenbank das Soll-Gewicht eines Stückguts nicht bereitgestellt wird. In einem solchen Fall kann es vorgesehen sein, dass die Steuereinrichtung das Ist-Gewicht als Soll-Gewicht speichert.

Um zu vermeiden, dass der Greifer gewichtstechnisch überbelastet wird, ist es bei einer bevorzugten Ausführungsform vorgesehen, dass das Ist-Gewicht des auf den Auflagetisch bewegten Stückguts einem Gesamtauflage-Gewicht hinzugefügt wird und bei Überschreiten eines Grenz-Gesamtauflage-Gewichts das Bewegen von weiterem Stückgut auf den Greifer verhindert und eine Entladung des Greifers initiiert wird.

Um eine Beschädigung des Greifers bzw. seiner Bewegungsmotorik zu vermeiden, kann es vorgesehen sein, dass der Greifer nach Bewegen sämtlichen Stückguts auf den Ablagetisch abhängig von dem Gesamtauflage-Gewicht beschleunigt und abgebremst wird.

Wenn der Greifer zusätzlich zu der Wiegeeinrichtung des Ablagetisches einen Befestigungsarm mit einem sich von einer vertikalen Zentralachse weg weisenden Tragabschnitt aufweist und dieser Tragabschnitt eine vorzugsweise als Dehnstreifen ausgebildete weitere Wiegeeinrichtung aufweist, kann es bei einer bevorzugten Ausführungsform vorgesehen sein, dass das Ist-Gewicht des auf den Auflagetisch bewegten Stückguts durch eine Mittelwertbildung der mittels der Wiegeeinrichtungen des Ablagetisches und des Befestigungsarms ermittelten Ist-Gewichte bestimmt wird.

Im Nachfolgenden werden bevorzugte Ausführungsformen des erfindungsgemäßen Greifers sowie des erfindungsgemäßen Verfahrens unter Bezugnahme auf die Zeichnung beschrieben, in welcher
Figuren 1a und 1b eine Schrägansicht sowie eine Draufsicht einer ersten Ausführungsform des erfindungsgemäßen Greifers zeigen,
Figuren 2a - 2c eine Schrägansicht, eine Draufsicht und eine Seitenansicht der ersten Ausführungsform zeigen, wobei ein Teil des Ablagetisches fortgelassen ist,
Figuren 3 und 4 Detailansichten der ersten Ausführungsform zeigen, wobei verschiedene Bauelemente fortgelassen sind,
Figur 5 eine Detailansicht des unteren Abschnittes der ersten Ausführungsform des erfindungsgemäßen Greifers zeigt,
Figur 6 eine zweite Ausführungsform des erfindungsgemäßen Greifers zeigt,
Figur 7 eine perspektivische Darstellung einer Kommissioniervorrichtung mit einem erfindungsgemäßen Greifer zeigt,
Figuren 8a - 8c und 9a, 9b schematisch verschiedene Stadien einer ersten und zweiten Ausführungsform des erfindungsgemäßen Verfahrens veranschaulichen, und
Figur 10 ein Ablaufdiagramm zu der ersten und zweiten Ausführungsform des erfindungsgemäßen Verfahrens zeigt.

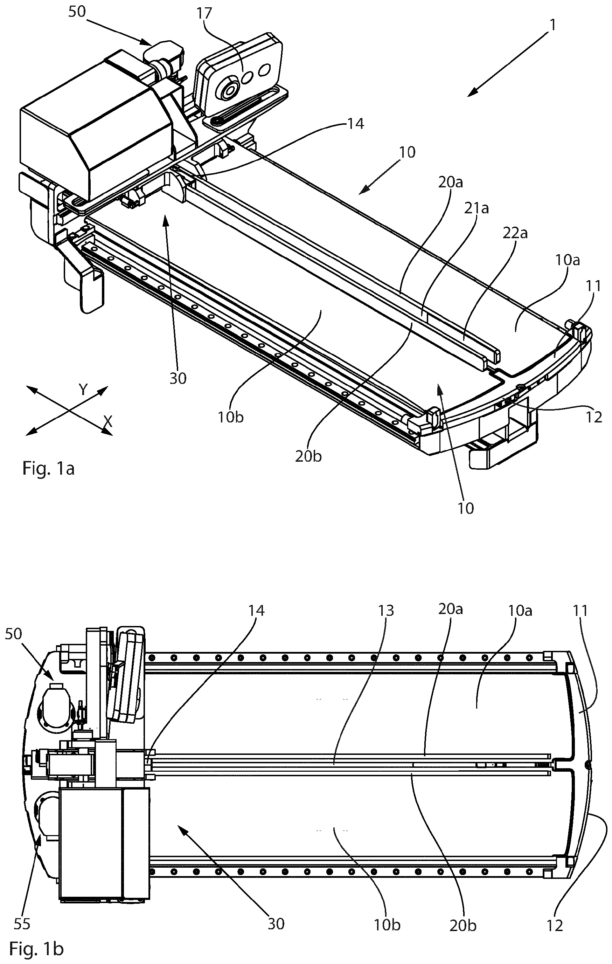

Figuren 1a und 1b zeigen eine Schrägansicht sowie eine Draufsicht einer ersten Ausführungsform des erfindungsgemäßen Greifers 1. Der Greifer 1 umfasst einen sich in einer ersten horizontalen Richtung (X-Richtung) und einer zweiten horizontalen Richtung (Y-Richtung), orthogonal zur ersten horizontalen Richtung, erstreckenden Ablagetisch 10 sowie einen Endabschnitt 11, der bei der gezeigten Ausführungsform eine gekrümmte Stirnfläche 12 aufweist. Der Ablagetisch 10 umfasst bei der gezeigten Ausführungsform zwei Ablagetischteile 10a, 10b, die in der Mitte durch einen Schlitz 13 voneinander getrennt sind. In diesem Schlitz ist ein Schiebeelement 14 angeordnet, welches über in den Figuren 1a und 1b nicht dargestellte Bauelemente in der ersten horizontalen Richtung bewegbar ist.

Oberhalb des Ablagetisches 10 ist eine Transporteinrichtung 30 angeordnet, die in der ersten horizontalen Richtung oberhalb des Ablagetisches bewegbar ist und mit welcher Stückgut auf den Ablagetisch bewegbar ist. Die Transporteinrichtung 30 umfasst bei der gezeigten Ausführungsform zwei Klemmbacken 20a, 20b, die bei der gezeigten Ausführungsform in der zweiten horizontalen Richtung bewegbar sind, wobei die für die Bewegung notwendigen Bauteile unter Bezugnahme auf eine nachfolgende Figur detaillierter beschrieben werden. Die Transporteinrichtung 30 umfasst ferner ein Sensormodul 17, mit welchem beispielsweise die Anordnung von Stückgut auf dem Ablagetisch 10 oder die Ausrichtung des Greifers an beispielsweise einer horizontalen Lagerfläche ermittelt bzw. geprüft werden kann. Zur Ermittlung der Anordnung wird von dem Sensormodul eine "Aufnahme" des abgelegten Stückguts erstellt, welche entweder von dem Sensormodul selbst oder (üblicherweise) von einer mit dem Sensormodul gekoppelten Steuereinrichtung analysiert wird, und zwar mittels einer Bildverarbeitungssoftware. Die Steuereinrichtung kann Teil des Greifers sein, es kann sich aber auch um die "zentrale" Steuereinrichtung beispielsweise einer Kommissioniervorrichtung handeln, in welcher der Greifer verbaut ist.

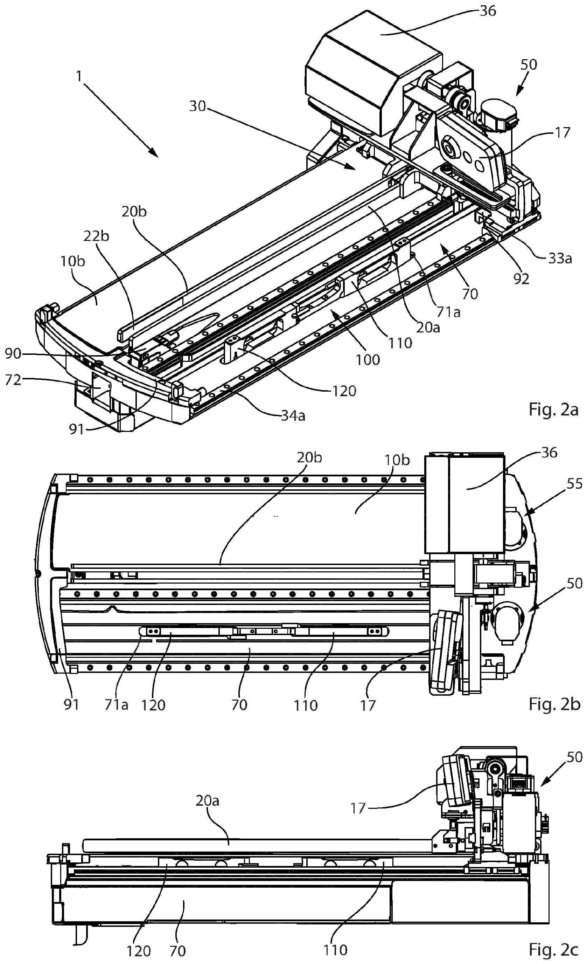

Die Transporteinrichtung umfasst ferner eine erste Antriebseinheit 50 (siehe dazu Fig. 2a - 2c) mit einem Antrieb 51, mit welcher über nicht dargestellte Bauelemente das Schiebeelement 14 in der ersten horizontalen Richtung bewegt werden kann. Darüber hinaus umfasst die Transporteinrichtung eine zweite Antriebseinheit 55 (siehe Figur 1b), mittels welcher die Transporteinrichtung 30 selbst in der ersten horizontalen Richtung bewegt werden kann. Die Klemmbacken 20a, 20b umfassen bei der gezeigten Ausführungsform zueinander parallele, vertikale Innenflächen 21a, 21b, die bei ihren der Transporteinrichtung 30 abgewandten Endabschnitten Abschnitte mit rutschhemmenden Material 22a, 22b umfassen.

Figuren 2a - 2c zeigen eine Schrägansicht, eine Draufsicht und eine Seitenansicht der ersten Ausführungsform, wobei der Ablagetischteil 10a fortgelassen ist, um darunterliegende Bauteile der ersten Ausführungsform des erfindungsgemäßen Greifers zu zeigen. Der Greifer umfasst einen bei der gezeigten Ausführungsform einteilig ausgebildeten Greifergrundkörper 70, der sich in der ersten horizontalen Richtung unterhalb des Ablagetisches erstreckt und in dem und auf dem die weiteren Bauteile des Greifers angeordnet sind. In dem Greifergrundkörper 70 sind zwei Öffnungen 71a angeordnet, in denen ein erstes Wiegeelement 110 und ein zweites Wiegeelement 120 einer ersten Wiegeeinrichtung 100 angeordnet sind. Die beiden Wiegeelemente 110, 120 der Wiegeeinrichtung 100 sind über ein Mittelteil miteinander verbunden, welches auf dem Greifergrundkörper 70 aufliegt und die beiden Wiegeelemente hält. Bei der gezeigten Ausführungsform sind die beiden Wiegeelemente 110, 120 als sogenannte "Plattform-Wägezellen" ausgeführt, wobei die dargestellten Wiegeelemente/Wägezellen auf Ecklastempfindlichkeit optimiert sind, sodass auch dann keine Messfehler auftreten, wenn das Wiegeelement nur in einer Ecke belastet ist. Bei alternativen Ausführungsformen können auch andere Arten von Wiegeelementen verwendet werden, beispielsweise S-förmige Wägezellen oder Druckkraft-Wägezellen. Bei der gezeigten Ausführungsform sind die beiden Wiegeelemente 110, 120 in der ersten horizontalen Richtung voneinander beabstandet angeordnet, sodass der "vordere" und "hintere" Teil des Ablagetischteils optimal abgedeckt ist. Die beiden Wiegeelemente 110, 120 der ersten Wiegeeinrichtung 100 sind über (nicht dargestellte) Leitungen mit einer Steuereinrichtung verbunden, welche die von einer Wiegeeinrichtung erhaltenen Signale verarbeitet. Die die Signale der Wiegeeinrichtung verarbeitende Steuereinrichtung kann Teil des Greifers sein und die Daten an eine zentrale Steuereinrichtung der Kommissionierrvorrichtung weiterleiten. Alternativ können die Signale der Wiegeeinrichtung 100 auch direkt an eine zentrale Steuereinrichtung in der Kommissioniervorrichtung weitergeleitet werden.

Bei der gezeigten Ausführungsform ist eine der ersten Wiegeeinrichtung 100 entsprechende zweite Wiegeeinrichtung unterhalb des Ablagetischteils 10b angeordnet, die entsprechend der ersten Wiegeeinrichtung 100 aufgebaut ist und entsprechend arbeitet. Die Anordnung und Anzahl der Wiegeeinrichtung und deren genaue Ausführung ist für die vorliegende Erfindung nicht wesentlich. Wesentlich ist lediglich, dass eine Wiegeeinrichtung vorgesehen ist, mit welcher das Gewicht von auf dem Greifer (in dieser Ausführungsform dem Ablagetisch) angeordneten Stückgut ermittelt werden kann. Bei der gezeigten Ausführungsform sind die Wiegeeinrichtungen dazu unmittelbar unterhalb des Ablagetisches angeordnet. Die beiden Ablagetischteile liegen im unbelasteten Zustand lediglich auf den Wiegeelementen einer Wiegeeinrichtung auf. Zum Schutz vor Überlastung sind eine vordere Auflagefläche 91 und eine hintere Auflageflächen 92 vorgesehen; bei dem Wiegen von Stückgut im zulässigen Gewichtsbereich sind die Auflageflächen aber nicht in Kontakt mit den Ablagetischteilen.

Der Greifergrundkörper 70 umfasst im vorderen Abschnitt eine weitere in Bezug auf die zweite horizontale Richtung zentrale Öffnung, in welcher ein Sensorsystem 90 angeordnet ist, mit welchem die Ausrichtung des Greifers zu beispielsweise einem Regalboden ermittelbar ist. Über eine Öffnung 72 in dem Greifergrundkörper 70 kann das Sensorsystem die Position des Greifers in Bezug auf beispielsweise einen Regalboden ermitteln.

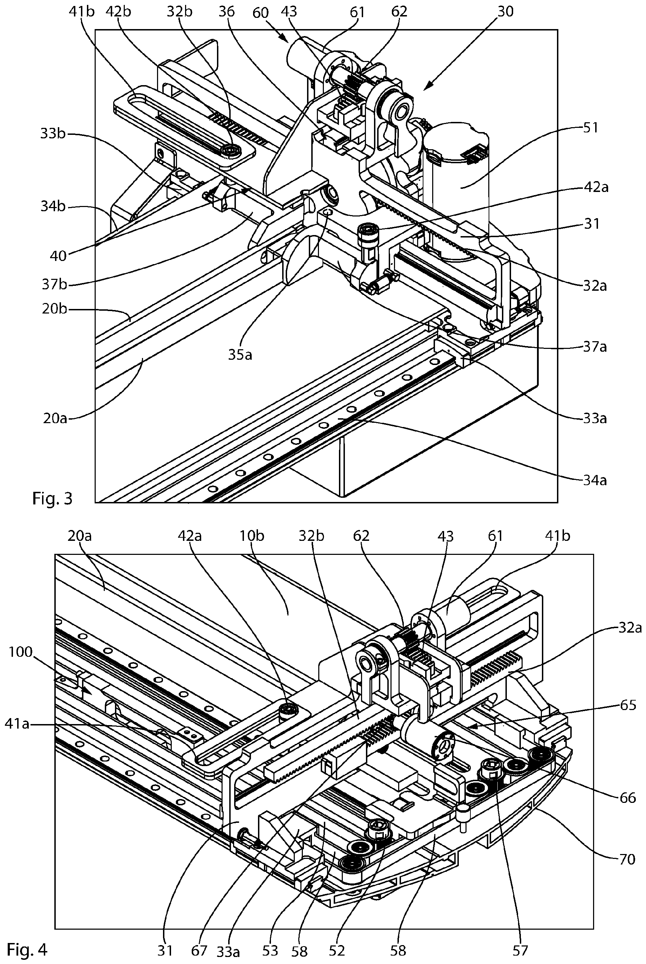

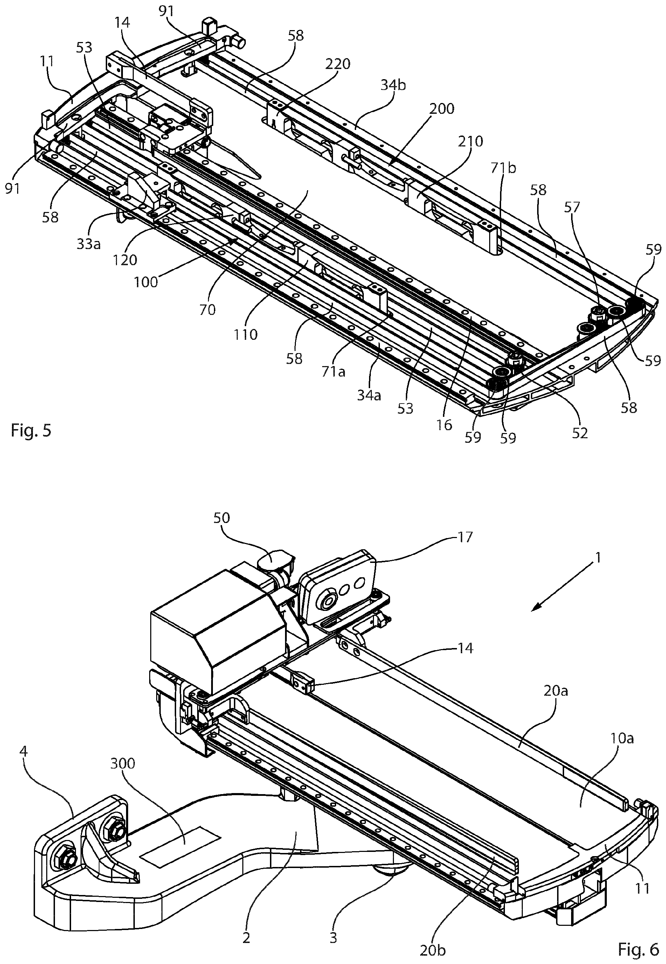

In den Figuren 2a - 2c ist oberhalb des Ablagetisches 10 die Transporteinrichtung 30 dargestellt. Die Transporteinrichtung 30 umfasst eine Verkleidung 36, unter der eine Mehrzahl von Bauelementen angeordnet sind, die für ein Schwenken der Klemmbacken 20a, 20b zuständig sind, wie es unter Bezugnahme auf nachfolgende Figuren detaillierter beschrieben wird. In Figur 2a ist aufgrund der Fortlassung des Ablagetischteils 10a ein Führungsschlitten 33a der Transporteinrichtung zu erkennen, der auf einer Längsführung 34a, die sich in der ersten horizontalen Richtung erstreckt, angeordnet ist und so die Bewegung der Transporteinrichtung 30 in der ersten horizontalen Richtung führt (Führungsschlitten 33b und Längsführung 34b sind in den Figuren 3 bzw. 5 zu erkennen). Wie die Transporteinrichtung 30 in der ersten horizontalen Richtung bewegt wird, wird unter Bezugnahme auf nachfolgende Figuren detaillierter beschrieben.

Figuren 3 und 4 zeigen Detailansichten der ersten Ausführungsform, wobei bei den beiden Detailansichten eine Mehrzahl von unterschiedlichen Bauteilen fortgelassen sind, um darunter befindliche Bauteile zu veranschaulichen. Bei beiden Detailansichten sind beispielsweise das Sensormodul und die Verkleidung samt einer Mehrzahl von darunter befindlichen Bauteilen fortgelassen. Zu sehen ist ein Grundgerüst der Transporteinrichtung 30 mit einer Rahmenstruktur 31, wobei die Rahmenstruktur 31 die Basis der Transporteinrichtung 30 bildet, an welcher eine Vielzahl weiterer Bauteilen angeordnet ist. Ein Teil der Transporteinrichtung 30 ist eine Führungseinrichtung 40, mit welcher die beiden Klemmbacken 20a, 20b verschwenkt werden, und zwar indem die Führungseinrichtung 40 relativ zu der Transporteinrichtung 30 in der ersten horizontalen Richtung bewegt wird. Dazu umfasst die Transporteinrichtung 30 eine dritte Antriebseinheit 60 mit einem Antrieb 61 als solchem, der über eine Welle ein Zahnrad 62 antreibt, welches in eine sich in der ersten horizontalen Richtung erstreckende Zahnstange 43 eingreift. Über die Kombination Zahnrad 62 / Zahnstange 43 wird die Drehbewegung der Welle des Antriebs 61 in eine lineare Bewegung umgesetzt. Über die Bewegung der Zahnstange 43 wird die Führungseinheit 40 in der ersten horizontalen Richtung bewegt. Die Führungseinrichtung 40 umfasst zwei Führungsrollen 42a, 42b, die in Längslöcher 41a, 41b eingreifen. Diese Längslöcher erstrecken sich in der zweiten horizontalen Richtung. Bei der in den Figuren 3 und 4 dargestellten Position, in welcher die beiden Klemmbacken 20a, 20b parallel zueinander angeordnet sind und nicht geschwenkt sind, verlaufen die Längslöcher 41a, 41b im Wesentlichen orthogonal zu der ersten horizontalen Richtung. Die Führungsrollen 42a, 42b sind mit Klemmbackenhalterungen 37a, 37b gekoppelt. Die Klemmbackenhalterungen 37a, 37b sind bei Schwenkachsen (nur Schwenkachse 35a ist explizit in Figur 3 gezeigt) mit der Transporteinrichtung gekoppelt, wobei die Klemmbackenhalterungen bei diesen Schwenkachsen nicht relativ zu der Transporteinrichtung in der ersten horizontalen Richtung bewegbar sind, sondern lediglich um diese Achsen schwenkbar sind. Bei einer Bewegung der Führungseinrichtung 40 in der ersten horizontalen Richtung nach "vorne" werden die Längslöcher 41a, 41b der Führungseinrichtung ebenfalls nach "vorne" bewegt, und diese Bewegung nimmt die Führungsrollen 42a, 42b "mit", wodurch die Klemmbackenhalterungen über die Führungsrollen ebenfalls in der ersten horizontalen Richtung bewegt werden. Da die Klemmbackenhalterungen aber bei den Schwenkachsen an der Transporteinrichtung gehalten werden, bedingt die Bewegung in der ersten horizontalen Richtung ein Schwenken der Klemmbackenhalterungen (und damit der Klemmbacken).

Bei der Detailansicht gemäß Figur 4 ist eine Hinteransicht der ersten Ausführungsform des Greifers dargestellt, wobei wieder eine Mehrzahl von Bauteilen fortgelassen ist. In Figur 4 ist ersichtlich, dass die Transporteinrichtung 30 eine vierte Antriebseinheit 65 mit einem Antrieb 66 als solchem und einem Zahnrad 67 aufweist. Das Zahnrad 67 greift in zwei sich in der zweiten horizontalen Richtung erstreckende Zahnstangen 32a, 32b ein, deren Zähne gegenüberliegend angeordnet sind. Die Zahnstangen 32a, 32b sind mit den Klemmbackenhalterungen gekoppelt, sodass eine Drehbewegung des Zahnrades 67 in eine lineare Bewegung der Klemmbackenhalterungen umgesetzt wird. Aufgrund der in Figur 4 dargestellten Anordnung der Zahnstangen bedingt eine Rotation des Zahnrades 67, dass sich die Zahnstangen gemeinsam nach außen oder innen bewegen, was einem Auffahren oder Zufahren (in der zweiten horizontalen Richtung) der Klemmbacken (zum Greifen eines Stückguts) gleichkommt. Bei der Bewegung der Klemmbacken nach außen oder innen verschieben sich die Führungsrollen 42a, 42b in den Längslöcher 41a, 41b der Führungseinrichtung, sodass die Klemmbacken in jeder beliebigen Position der Klemmbacken verschwenkbar sind und die Klemmbacken in jeder Schwenkstellung verfahrbar sind. In Figur 4 sind weitere Bauteile zu dem Antrieb der Transporteinrichtung 30 sowie des Schiebeelements dargestellt, wobei diese Bauteile nachfolgend unter Bezugnahme auf Figur 5 näher beschrieben werden.

Figur 5 zeigt eine Detailansicht des unteren Abschnittes der ersten Ausführungsform des erfindungsgemäßen Greifers. Bei dieser Ansicht sind sämtliche Bauteile der Transporteinrichtung (und damit der Führungseinrichtung) fortgelassen, und es ist lediglich der Greifergrundkörper 70 mit direkt darauf angeordneten Bauteilen dargestellt. Auf dem Greifergrundkörper 70 sind zwei Zahnriemenräder 52, 57 angeordnet, die Teil der (nicht dargestellten) ersten und zweiten Antriebseinheit sind. Das Zahnriemenrad 52 (Teil der ersten Antriebseinheit) treibt einen ersten Antriebsriemen 53 an, der sich auf der "linken" Seite in der ersten horizontalen Richtung erstreckt. Der erste Antriebsriemen 53 ist mit dem Schiebeelement gekoppelt, sodass eine Drehbewegung des Zahnriemenades 52 der ersten Antriebseinheit eine Bewegung des Schiebeelements 14 in der ersten horizontalen Richtung längs einer Schiebelementführung 16 bedingt.

Das zweite Zahnriemenrad 57, welches Teil der zweiten Antriebseinheit ist, treibt einen zweiten Antriebsriemen 58 an, welcher über eine Mehrzahl von Umlenkungsrollen (siehe Umlenkrollen 59) an den äußeren Längsseiten des Greifergrundkörpers sowie der hinteren Stirnseite des Greifergrundkörpers geführt ist. Der zweite Antriebsriemen 58 ist mit den Führungsschlitten 33a, 33b (dargestellt ist lediglich Führungsschlitten 33a in Figur 5, für 33b siehe Figur 3) gekoppelt, sodass eine Drehbewegung des zweiten Zahnriemenrades 57 eine Bewegung der Transporteinrichtung 30 in der ersten horizontalen Richtung bedingt.

In Figur 5 ist ferner die zweite Wiegeeinrichtung 200 zu erkennen, die in einer Öffnung 71b des Greifergrundkörpers 70 angeordnet ist. Die zweite Wiegeeinrichtung 200 umfasst (entsprechend der ersten Wiegeeinrichtung 100) zwei Wiegeelemente 210, 220, die bei der gezeigten Ausführungsform ebenfalls als Plattform-Wägezellen ausgebildet sind. Bei alternativen Ausführungsformen kann auch die zweite Wiegeeinrichtung anders ausgebildet sein, solange sichergestellt ist, dass mit dieser das Gewicht von auf dem Ablagetischteil aufliegendem Stückgut ermittelbar ist.

Figur 6 zeigt eine zweite Ausführungsform des erfindungsgemäßen Greifers. Während bei der ersten Ausführungsform des erfindungsgemäßen Greifers das Gewicht des Stückguts mit Wiegeeinrichtungen ermittelt wird, die direkt unterhalb des Ablagetisches angeordnet sind, wird das Gewicht von auf dem Greifer aufliegendem Stückgut bei dieser zweiten Ausführungsform über eine Wiegeeinrichtung 300 ermittelt, die auf einem Tragabschnitt 2 eines Befestigungsarmes 4 angeordnet ist. Über seinen bzw. den Befestigungsarm 4 ist der Greifer 1 an einer nicht dargestellten Greiferführung befestigt. Der Greifer selbst ist über eine vertikale Zentralachse 3 an dem Tragabschnitt 2 des Befestigungsarms 4 befestigt. Bei dieser zweiten Ausführungsform ist die Wiegeeinrichtung als "Biegestab-Wägezelle" (oder einfach Biegestab) ausgebildet und ebenfalls mit einer Steuereinrichtung, entsprechend der ersten und zweiten Wiegeeinrichtung der ersten Ausführungsform, gekoppelt.

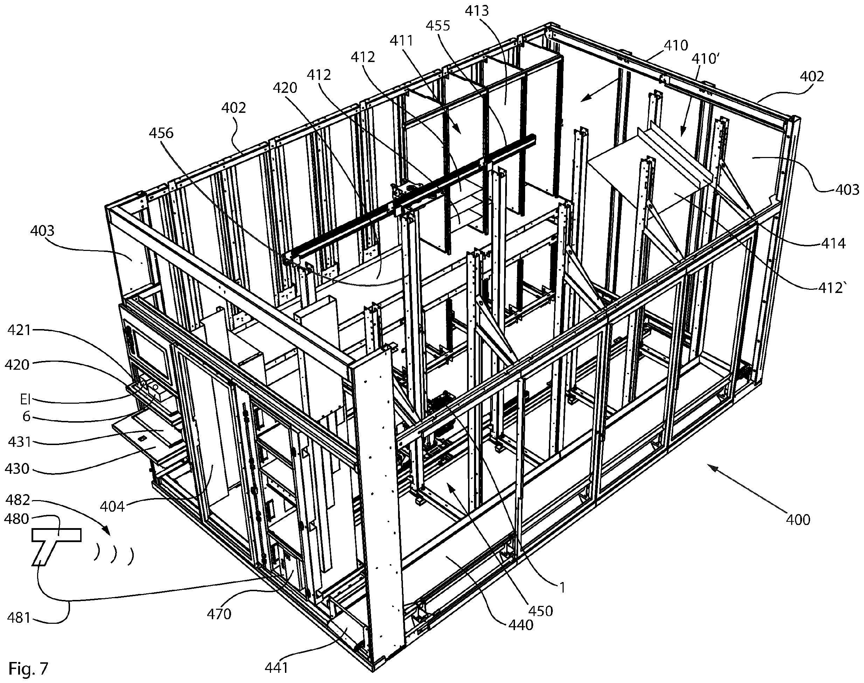

Figur 7 zeigt eine perspektivische Darstellung einer Kommissioniervorrichtung 400, mit welcher das erfindungsgemäße Verfahren ausgeführt werden kann und welche dazu einen erfindungsgemäßen Greifer 1 umfasst. Die Kommissioniervorrichtung 400 ist nachfolgend lediglich beispielhaft und zum besseren Verständnis der nachfolgenden detaillierten Beschreibung des erfindungsgemäßen Verfahrens beschrieben. Mit der gezeigten Kommissioniervorrichtung werden als Stückgut Arzneimittelpackungen gelagert, und im Nachfolgenden wird auch der Begriff der Arzneimittelpackung (beispielhaft für den Begriff Stückgut) verwendet.

Die Kommissioniervorrichtung 400 umfasst eine Gerüststruktur 402, an welcher eine Mehrzahl von Verkleidungselementen 403 angebracht ist. Der Übersicht halber sind eine Vielzahl der Verkleidungselemente sowie einige Elemente der Gerüststruktur 402 fortgelassen. Die Kommissioniervorrichtung 400 umfasst eine erste Regalreihe 410 mit mehreren Regalen, die jeweils eine Mehrzahl von übereinander angeordneten, sich in einer horizontalen Ebene erstreckende Regalböden 412 mit einer Mehrzahl von Lagerplätzen aufweisen (wobei in Figur 7 lediglich drei Regalböden 412 dargestellt sind; weitere Regalböden sind über, unter und neben den dargestellten angeordnet). Die einzelnen Regale 411 der ersten Regalreihe 410 sind durch Regalwände 413 und eine Mehrzahl der vorgenannten Regalböden 412 gebildet. Bei dem gezeigten Beispiel sind alle Stirnkanten (Ladekanten) der Regalböden in einer vertikalen Ebene angeordnet, was das Ein- und Auslagern von Stückgütern bzw. Arzneimittelpackungen in und von den Regalböden vereinfacht. Die gezeigten Regalböden sind für eine chaotische Lagerung von Arzneimittelpackungen ausgebildet.

Bei der gezeigten Kommissioniervorrichtung ist gegenüber der ersten Regalreihe 410 eine zweite Regalreihe 410` vorgesehen, die aber aus Gründen der Übersichtlichkeit nur angedeutet ist; lediglich einzelne Elemente des Stützgerüstes für diese Regalreihe und ein Regalboden 412` mit einem Lagerschacht 414 für die sortenreine Lagerung sind dargestellt. Die Lagerschächte der Kommissioniervorrichtung sind zur Lagerung von Schnelldrehern vorgesehen und für die vorliegende Erfindung nicht relevant.

Die beispielhaft gezeigte Kommissioniervorrichtung umfasst zwei Einlagerungseinrichtungen 420, 430, die übereinander angeordnet und in die erste Regalreihe 410 integriert sind, so dass über und unter den beiden Einlagerungseinrichtungen 420, 430 Regalböden 412 vorgesehen sind. Die Einlagerungseinrichtungen 420, 430 ragen bei der Front der Kommissioniervorrichtung aus dieser heraus und umfassen bei dem herausragenden Teil jeweils einen Ablagebereich 421, 431, auf welchen Arzneimittelpackungen zur Einlagerung abgelegt werden können. Bei Figur 7 sind in dem Ablagebereich 421 der oberen Einlagerungseinrichtung 420 zwei Arzneimittelpackungen 6 angeordnet.

Bei den Ablagebereichen 421, 431 handelt es sich nicht um Bauteile als solche, sondern um spezielle Bereiche der Einlagerungseinrichtungen, in denen Arzneimittelpackungen gemäß der Ablagevorgabe angeordnet werden. Die Ablagebereiche können beispielsweise durch Markierungen auf einer als Bandförderer ausgebildeten Einlagerungseinrichtung ausgebildet sein. Alternativ kann eine Lichtschranke einen Ablagebereich markieren. Schließlich ist es denkbar, dass eine bewegbare Schranke einen Ablagebereich definiert.

Zwischen der dargestellten ersten Regalreihe und der lediglich angedeuteten zweiten Regalreihe ist ein horizontal und vertikal an einer Führung verfahrbares Bediengerät 450 mit einem erfindungsgemäßen Greifer 1 vorgesehen, der unter Bezugnahme auf die vorhergehenden Figuren bereits näher beschrieben wurde. Der Greifer 1 ist entlang einer lediglich angedeuteten Horizontalführung 455 und einer Vertikalführung 456 in einer Gasse zwischen den beiden Regalreihen verfahrbar.

In der Kommissioniervorrichtung ist ferner eine Auslagerungseinrichtung 440 angeordnet, die hier als Bandförderer ausgebildet ist und zwischen der zweiten Regalreihe und der rechten Außenwand der Kommissioniervorrichtung angedeutet ist. Über die Auslagerungseinrichtung werden Arzneimittelpackungen, die auf die Auslagerungseinrichtung bewegt werden, zu einem Entnahmebereich 441 der Auslagerungseinrichtung bewegt. Die Arzneimittelpackungen können auf die Auslagerungseinrichtung gelangen, indem diese beispielsweise mit dem Bediengerät 450, gegebenenfalls unter Zwischenschaltung eines nicht dargestellten Hilfsauslagerungspfades, auf die Auslagerungseinrichtung bewegt werden. Bei den geneigten Lagerschächten (in Figur 7 ist lediglich ein solcher Lagerschacht 414 dargestellt) können die Arzneimittelpackungen einfach durch Auslösen einer bei einem Ende eines Lagerschachtes angeordneten Auslöseeinrichtung auf die Auslagerungseinrichtung bewegt werden. In einem solchen Fall fallen die Arzneimittelpackungen einfach schwerkraftbedingt auf die Auslagerungseinrichtung.

Bei Figur 7 ist im Frontbereich der Kommissioniervorrichtung eine Steuereinrichtung 470 angeordnet, die mit dem Bediengerät, den Sensoren und Sensorsystemen, und üblicherweise den Einlagerungseinrichtungen und der Auslagerungseinrichtung gekoppelt ist. In der Mitte des Frontbereiches der Kommissioniervorrichtung ist eine Türöffnung 404 vorgesehen, durch welche die Vorrichtung zu Wartungszwecken und in Störfällen betreten werden kann.

In Figur 7 ist ferner symbolisch ein Lesegerät 480 angedeutet, welches über eine Leitung 481 oder über eine Drahtlosverbindung 482 mit der Steuereinrichtung 470 koppelbar ist und mit welchem ein Identifizierer EI einer Arzneimittelpackung auslesbar ist.

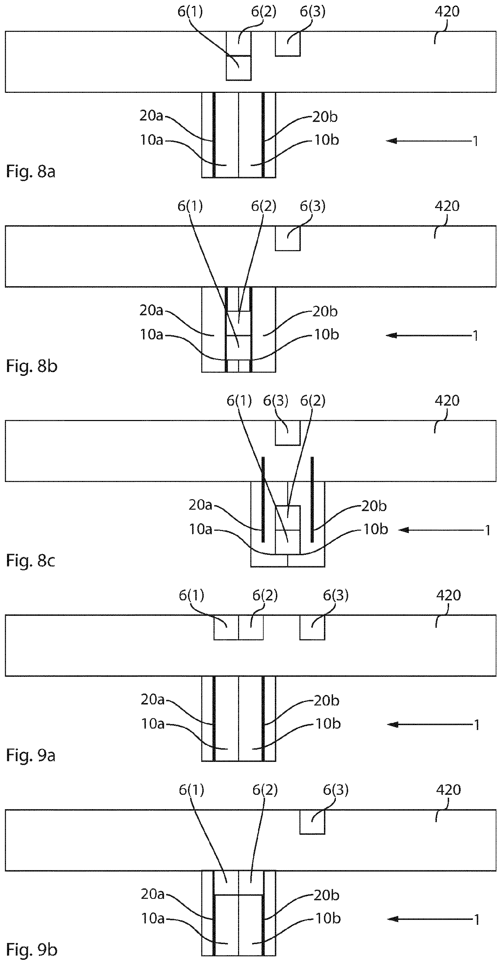

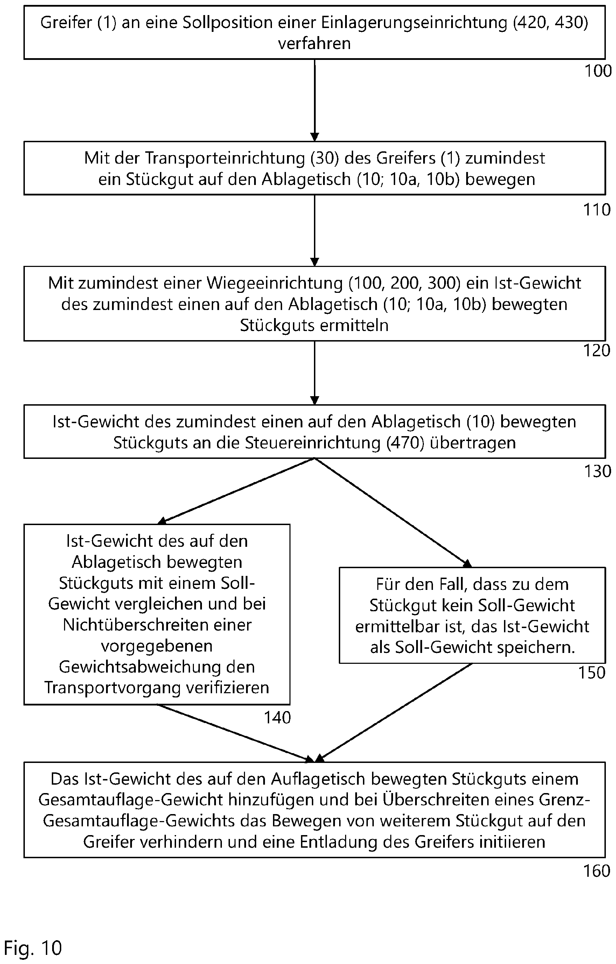

Unter Bezugnahme auf die Figuren 8a - 8c, 9a und 9b, und 10 werden zwei Ausführungsformen des erfindungsgemäßen Verfahrens beschrieben. In einem Schritt 100 wird zunächst der erfindungsgemäße Greifer 1 an eine Sollposition bei einer Einlagerungseinrichtung 420 verfahren. Dies ist in den Figuren 8a und 9a dargestellt. Der Greifer 1 umfasst bei den beiden nachfolgend beschriebenen Ausführungsformen des erfindungsgemäßen Verfahrens einen Ablagetisch mit zwei Ablagetischteilen 10a, 10b. In einem nächsten Schritt 110 wird mit Klemmbacken 20a, 20b einer Transporteinrichtung 30 des Greifers 1 Stückgut (hier zwei Stückgüter 6(1) und 6(2)) auf den Ablagetisch bewegt. Bei der ersten Ausführungsform des erfindungsgemäßen Verfahrens (Figur 8b) sind die beiden Stückgüter 6(1), 6(2) in Bezug auf die erste horizontale Richtung hintereinander angeordnet, bei der zweiten Ausführungsform (Figur 9b) nebeneinander. In einem nachfolgenden Schritt 120 wird mit den (in diesen Figuren nicht dargestellten) Wiegeeinrichtungen das Ist-Gewicht des auf den Ablagetisch bewegten Stückguts ermittelt und an die Steuereinrichtung übertragen (Schritt 130). Die Wiegeeinrichtungen übertragen dabei "einfach" das ermittelte Gewicht, wobei es unerheblich ist wie viele Stückgüter wie auf dem Auflagetisch angeordnet sind.

Für den Fall, dass mit einer Transportbewegung mehr als ein Stückgut auf den Ablagetisch bewegt wird, benötigt die Steuereinrichtung Informationen darüber, wie die Stückgüter auf der Einlagerungseinrichtung angeordnet waren, damit bei einem Greifer mit zwei Ablagetischteilen mit jeweils zugeordneten Wiegeeinrichtungen eine sinnvolle Auswertung der von den Wiegeeinrichtungen gelieferten Daten möglich ist. Da diese Informationen aber bekannt sind, hat die Steuereinrichtung auch Kenntnis davon, wie das Stückgut auf dem Ablagetisch angeordnet ist. Dies bedeutet, dass bei der ersten Ausführungsform mit den beiden Wiegeeinrichtungen zusammen das Gesamtgewicht der beiden Stückgüter 6(1) und 6(2) ermittelt wird, wohingegen bei der zweiten Ausführungsform mit den Wiegeeinrichtungen das Einzelgewicht der Stückgüter 6(1) bzw. 6(2) ermittelbar ist.

Die ermittelten Ist-Gewichte können unterschiedlich weiterverarbeitet werden, in Abhängigkeit davon, welches Ziel erreicht werden soll. Wenn beispielsweise das Soll-Gewicht eines Stückguts (oder mehrerer identischer Stückgüter) nicht bekannt ist, kann die Steuereinrichtung das ermittelte Ist-Gewicht als das Soll-Gewicht des Stückguts speichern (Schritt 150, erste Ausführungsform) und beispielsweise für spätere Verifikation nutzen. Wenn der Steuereinrichtung das Soll-Gewicht eines oder mehrerer auf den Ablagetisch bewegter Stückgüter bekannt ist (Schritt 140, zweite Ausführungsform), kann das Soll-Gewicht mit dem Ist-Gewicht verglichen werden und bei Nichtüberschreiten einer vorgegebenen Gewichtsabweichung der Transportvorgang verifiziert werden, und zwar dahingehend, dass basierend auf dem Gewichtsvergleich das "richtige" Stückgut auf den Ablagetisch bewegt wurde.

Bei beiden Ausführungsformen ist es denkbar, in einem Schritt 160 das Ist-Gewicht des auf den Ablagetisch bewegten Stückguts einem Gesamtauflage-Gewicht hinzuzufügen und bei Überschreiten eines Grenz-Gesamtauflage-Gewichts das Bewegen von weiterem Stückgut auf den Greifer zu verhindern und eine Entladung des Greifers zu initiieren.

Alternativ oder zusätzlich kann man das ermittelte Ist-Gewichts eines Stückguts nutzen, um dies gewichtsabhängig (und nach dem Platzbedarf, entsprechend einer chaotischen Lagerung) auf einem Regalboden der Kommissioniervorrichtung zu lagern. Ferner kann man das ermittelte Gesamtauflage-Gewicht als Basis für die Bewegung (insbesondere Beschleunigung und Abbremsung) des Greifers nutzen.

## Patentansprüche

1. Greifer (1) für eine Kommissioniervorrichtung zur Lagerung von Stückgut, aufweisend:
einen sich in einer ersten horizontalen Richtung und einer zweiten horizontalen Richtung, orthogonal zur ersten horizontalen Richtung erstreckenden Ablagetisch (10),
eine über dem Ablagetisch (10) angeordnete und in der ersten horizontalen Richtung bewegbare Transporteinrichtung (30) zum Bewegen von Stückgut auf den Ablagetisch (10) des Greifers,
**dadurch gekennzeichnet, dass** der Greifer (1) zumindest eine Wiegeeinrichtung (100, 200, 300) zum Ermitteln des Gewichts zumindest eines auf dem Greifer (1) angeordneten Stückguts umfasst.

2. Greifer (1) für eine Kommissioniervorrichtung zur Lagerung von Stückgut nach Anspruch 1,
**dadurch gekennzeichnet, dass** die zumindest eine Wiegeeinrichtung (100, 200) derart zu dem Ablagetisch (10) angeordnet ist, dass mit der Wiegeeinrichtung (100, 200) das Gewicht von auf dem Ablagetisch aufliegendem Stückgut ermittelbar ist.

3. Greifer (1) für eine Kommissioniervorrichtung zur Lagerung von Stückgut nach Anspruch 2,
**dadurch gekennzeichnet, dass** der Ablagetisch (10) mehrteilig ist und jedem Ablagetischteil (10a, 10b) eine Wiegeeinrichtung (100, 200) zugeordnet ist, mit welcher das Gewicht von auf dem Ablagetischteil (10a, 10b) aufliegendem Stückgut ermittelbar ist.

4. Greifer (1) für eine Kommissioniervorrichtung zur Lagerung von Stückgut nach einem der Ansprüche 1 - 3,
**dadurch gekennzeichnet, dass** der Greifer (1) einen Befestigungsarm (4) umfasst, mit welchem der Greifer an einer Greiferführung befestigbar ist, wobei der Befestigungsarm (4) einen sich von einer vertikalen Zentralachse (3) des Greifers weg weisenden Tragabschnitt (2) aufweist und dieser Tragabschnitt (2) eine Wiegeeinrichtung (300) aufweist.

5. Greifer (1) für eine Kommissioniervorrichtung zur Lagerung von Stückgut nach Anspruch 4,
**dadurch gekennzeichnet, dass** die Wiegeeinrichtung (300) des Tragabschnitts (2) als Biegestab ausgebildet ist.

6. Greifer (1) für eine Kommissioniervorrichtung zur Lagerung von Stückgut nach einem der Ansprüche 2 - 5,
**dadurch gekennzeichnet, dass** die zumindest eine dem Ablagetisch (10) zugeordnete Wiegeeinrichtung (100, 200) jeweils zwei Wiegeelemente (110, 120; 210, 220) umfasst.

7. Verfahren zum Betreiben einer Kommissioniervorrichtung mit zumindest
einer Steuereinrichtung (470), einer Einlagerungseinrichtung (420, 430) sowie einem Bediengerät (450) mit einem Greifer (1) mit zumindest einer Wiegeeinrichtung (100, 200, 300) zum Ermitteln eines Gewichts zumindest eines auf dem Greifer (1) angeordneten Stückguts, wobei
der Greifer an eine Sollposition einer Einlagerungseinrichtung (420, 430) verfahren wird,
mit einer Transporteinrichtung (30) des Greifers (1) zumindest ein Stückgut auf den Ablagetisch (10) bewegt wird,
mit der zumindest einen Wiegeeinrichtung (100, 200, 300) ein Ist-Gewicht des zumindest einen auf den Ablagetisch (10) bewegten Stückguts ermittelt und an die Steuereinrichtung (370) übertragen wird.

8. Verfahren zum Betreiben einer Kommissioniervorrichtung nach Anspruch 7,
**dadurch gekennzeichnet, dass** das übertragene Ist-Gewicht des auf den Ablagetisch bewegten Stückguts mit einem Soll-Gewicht verglichen wird und bei Nichtüberschreiten einer vorgegebenen Gewichtsabweichung der Transportvorgang verifiziert wird.

9. Verfahren zum Betreiben einer Kommissioniervorrichtung nach Anspruch 7,
wobei der Greifer (1) ferner ein Sensormodul (17) umfasst, mit welchem die Anordnung von auf den Ablagetisch (10) bewegten Stückguts erfassbar ist und der Ablagetisch (10) mehrteilig ist und jedem Ablagetischteil (10a, 10b) eine Wiegeeinrichtung (100, 200) zugeordnet ist, mit welcher das Gewicht von auf dem Ablagetischteil (10a, 10b) aufliegendem Stückgut ermittelbar ist,
**dadurch gekennzeichnet,**
**dass** mit dem Sensormodul eine Aufnahme der Stückgüter auf dem Ablagetisch erstellt wird und basierend auf dieser Aufnahme die genaue Anordnung des Stückguts ermittelt wird, und,
**dass**, sofern auf jedem Ablagetischteil (10a, 10b) Stückgut angeordnet ist, die Ist-Gewichte des auf den Ablagetischteilen (10a, 10b) angeordneten Stückguts ermittelt und an die Steuereinrichtung (370) übertragen werden.

10. Verfahren zum Betreiben einer Kommissioniervorrichtung nach einem der Ansprüche 7 - 9, **dadurch gekennzeichnet, dass** die Steuereinrichtung (470) für den Fall, dass zu einem Stückgut kein Soll-Gewicht ermittelbar ist, das Ist-Gewicht als Soll-Gewicht speichert.

11. Verfahren zum Betreiben einer Kommissioniervorrichtung nach einem der Ansprüche 7 - 10,
**dadurch gekennzeichnet, dass** das Ist-Gewicht des auf den Auflagetisch bewegten Stückguts einem Gesamtauflage-Gewicht hinzugefügt wird und bei Überschreiten eines Grenz-Gesamtauflage-Gewichts das Bewegen von weiterem Stückgut auf den Greifer verhindert und eine Entladung des Greifers initiiert wird.

12. Verfahren zum Betreiben einer Kommissioniervorrichtung nach einem der Ansprüche 7 - 11,
**dadurch gekennzeichnet, dass** der Greifer nach Bewegen sämtlichen Stückguts auf den Ablagetisch in abhängig von dem Gesamtauflage-Gewicht beschleunigt und abgebremst wird.

13. Verfahren zum Betreiben einer Kommissioniervorrichtung nach einem der Ansprüche 7 - 12,
wobei der Greifer einen Befestigungsarm (4) mit einer sich von einer vertikalen Zentralachse (3) weg weisenden Tragabschnitt (2) aufweist und dieser Tragabschnitt (2) eine Wiegeeinrichtung (300) aufweist und dem Auflagetisch zumindest eine weitere Wiegeeinrichtung (100, 200) zugeordnet ist,
**dadurch gekennzeichnet, dass** das Ist-Gewicht des auf den Auflagetisch bewegten Stückguts durch eine Mittelwertbildung des mittels der Wiegeeinrichtungen (100, 200) des Ablagetisches und der Wiegeeinrichtung (300) des Befestigungsarms (4) ermittelten Ist-Gewichts bestimmt wird.

14. Verfahren zum Betreiben einer Kommissioniervorrichtung nach Anspruch 13,
**dadurch gekennzeichnet, dass** die Wiegeeinrichtung (300) des Tragabschnitts (2) als Biegestab ausgebildet ist.
